# EUROPÄISCHE PATENTSCHRIFT

(11) **EP 1 312 064 B1**
(45) Veröffentlichungstag und Bekanntmachung des Hinweises auf die Patenterteilung: **27.10.2004**
(21) Anmeldenummer: 01965138.9
(22) Anmeldetag: 18.07.2001
(51) Int. Cl.: G09B 3/12

(54) **LERNSYSTEM**
LEARNING SYSTEM
SYSTEME D'APPRENTISSAGE

(30) Priorität: 18.08.2000 DE 10040377
(43) Veröffentlichungstag der Anmeldung: 21.05.2003
(73) Patentinhaber: Walch, Helmut, 6460 Imst (AT)
(72) Erfinder: Walch, Helmut, 6460 Imst (AT)
(74) Vertreter: Schwarzensteiner, Marie-Luise, Dr.
(86) Internationale Anmeldenummer: PCT/EP2001/008310
(87) Internationale Veröffentlichungsnummer: WO 2002/017274

(56) Entgegenhaltungen:
- DE-C- 4 205 937
- DE-U- 29 900 928
- US-A- 2 797 499
- US-A- 3 419 973
- US-A- 3 696 531
- US-A- 4 634 385

## Beschreibung

Die vorliegende Erfindung betrifft eine Vorrichtung zur Überprüfung der Richtigkeit der Lösung von (einer) Aufgabe(n). Solche Vorrichtungen erleichtern Kindern im Vor- und Grundschulalter das Erlernen und Trainieren von Basiswissen auf spielerische Art und fördern das abstrakte Denken und das Merkvermögen.

Derartige Systeme, welche Lernen, Denken und Merkfähigkeit. unterstützen und fördern, sind im Prinzip bekannt.

Es gibt aus verschiedenen Verlagen Lernhefte, bei denen verschiedene Aufgaben oder Fragen auf bestimmten Seiten vorgegeben werden, die Lösungen dazu aber auf anderen Seiten festgehalten sind. Das erfordert ein fortwährendes Hin- und Zurückblättern durch den Benutzer, um die Lösungen oder Antworten zu überprüfen. Das ist zum einen mühselig, zum anderen ist bei der Suche nach der Lösung für die aktuelle Aufgabe oder Frage, die Aufnahme der Lösung der nächsten Aufgabe oft unvermeidlich. Dadurch wird die nächste Frage oder Aufgabe irrelevant.

Aus dem Hause Westermann gibt es beispielsweise von A. Lük ein Lernsystem. Dabei handelt es sich um Lernhefte, bei denen verschiedene Aufgaben oder Fragen vorgegeben werden. Zur Beantwortung dienen eine Legeplatte und eine entsprechende Anzahl von Lösungssteinen mit aufgedruckten Codes, die richtig auf der Platte aufgelegt werden müssen. Nach Beantwortung einer bestimmten Anzahl von Fragen wird die Legeplatte gewendet, und anhand eines entstandenen, nun sichtbaren Musters kann die Richtigkeit der Lösungen kontrolliert werden. Im Falle einer Fehlbeantwortung muss die Gesamtzahl der Lösungssteine entfernt werden und der gesamte Fragen-Komplex von neuem gelöst werden. Auch bei richtiger Beantwortung aller Fragen sind vor Beginn einer neuen Fragenreihe alle Lösungssteine wieder von der Legeplatte zu entfernen, um neue Aufgaben lösen zu können. Kinder verlieren bei dieser Art von Lernsystem oft rasch die erforderliche Geduld oder Lust.

Ein anderes Lernsystem "Bandolino" der Arena Verlag GmbH arbeitet mit Bändern bzw. einem Band, das man entsprechend mehreren Aufgaben, welcher Lösungen zuzuordnen sind, um einen Karton wickeln muss. Die Wickelung ist nur dann richtig, wenn den Aufgaben die richtige Lösungen zugeordnet sind (US-PS 4,493,654). Die Wickelung mit den Bändern erfordert einesteils manuelles Geschick. Andernteils ist auch bei diesem System vor Beginn der neuen Fragereihe oder bei teilweiser fehlerhafter Beantwortung die Wickelung restlos aufzulösen, was eine beträchtliche zeitliche Verzögerung im gesamten Arbeitsablauf bedeutet.

Die US 3 696 531 A offenbart eine Vorrichtung zum Erlangen des Ergebnisses einer einfachen mathematischen Operation. Dabei wird das Verfahren der Ergebnisfindung visuell veranschaulicht. Mittels dreier Drehknöpfe können zwei Summanden sowie die hieraus resultierende, vom Anwender vermutete Summe, manuell eingestellt werden. Mittels einer mechanisch-optischen Anzeigevorrichtung wird gezeigt, wenn die eingestellte Gleichung erfüllt ist.

Aufgabe der vorliegenden Erfindung ist es daher, ein verbessertes Lernsystem anzugeben, das die erläuterten Nachteile des Standes der Technik nicht aufweist, insbesondere sollte ein Lernsystem geschaffen werden, mit dem eine beliebig hohe Anzahl von Aufgaben und/oder Fragen auf schnelle, unkomplizierte Weise gelöst und das Ergebnis auf einen Blick kontrolliert werden kann. Des weiteren soll eine rasche punktuelle Korrektur einer fehlerhaft gelösten Aufgabe möglich sein. Als zusätzlicher herausragender Faktor soll die Möglichkeit der fortlaufenden Benutzung des Systems ohne eine immer wieder auftretende Notwendigkeit der Rück- bzw. Nullstellung des Systems gegeben sein.Das System bzw. die Vorrichtung soll dazu auch einen ergonometrisch vorteilhaften Vorgang ermöglichen.

Aspekt des Erfindung sind in Anspruch 1 offenbart.

Diese Vorrichtung ist in jeder Hinsicht vorteilhaft und erfüllt alle gestellten Anforderungen.

Aufgabe und Lösung sind auf dem selben Informationsträger nach dem Muster eines vereinfachten Multiple-Choice-Systems angeordnet. Durch die Codierung der Antworten bzw. Lösungen, die sich identisch auf der Wählscheibe vorne wiederfindet, lässt sich durch einfaches Drehen der Wählscheibe die richtige Lösung der gestellten Aufgabe schnell zuordnen. Der zweite Code auf der Rückseite der Wählscheibe, der dem ersten Code zugeordnet ist, zeigt zuverlässig an, ob alle Aufgaben richtig gelöst sind. Ein Hin- und Zurückblättern ist nicht mehr erforderlich. Durch die schnelle, unkomplizierte Weise, in welcher die Aufgaben gelöst werden können, erfüllt das System didaktisch höchste Ansprüche.

Bevorzugte Ausführungsformen ergeben sich aus den Unteransprüchen 2 bis 26.

So ist die erfindungsgemäße Vorrichtung dadurch gekennzeichnet, dass der erste Code und/oder der zweite Code aus Farben, Farbkombinationen, Zahlen, Buchstaben, Symbolen und/oder sonstigen graphischen Mustern gebildet ist. Die Auswahl dieser Codierung erlaubt einen simplen Umgang mit dem Lernsystem, das dadurch auch von Vorschulkindern und/oder Schulanfängern ohne wesentliche Hilfe durch Erwachsene verwendet werden kann.

Bei einer bevorzugten Ausführungsform ist der erste Code und der zweite Code zueinander entsprechend aus Farben oder Farbkombinationen oder Zahlen oder Buchstaben oder Symbolen und/oder sonstigen graphischen Mustern gebildet. Diese Ausführungsform ist insbesondere einfach für die Herstellung des Lernsystemes.

Andererseits wird für andere Zwecke, beispielsweise ein kombiniertes Trainieren von Lesen und Rechnen, bevorzugt ein Lernsystem zur Verfügung gestellt, bei dem der erste Code und der zweite Code zueinander unterschiedlich aus Farben oder Farbkombinationen oder Zahlen oder Buchstaben oder Symbolen und/oder sonstigen graphischen Mustern gebildet ist.

Für eine einfache Handhabung des Lernsystemes wird bevorzugt, dass die Wählscheiben drehbar an einem Scheibenträger befestigt sind, der hinter dem wenigstens einen Informationsträger angeordnet ist. Dabei können der Informationsträger und der Scheibenträger entweder integral miteinander oder getrennt voneinander ausgebildet sein. Welche Variante man wählt, wird im Wesentlichen vom Umfang des vorgesehenen Lernsystemes abhängen.

Vorzugsweise kann jedem Informationsträger ein Scheibenträger zugeordnet sein. Das erleichtert die Zuordnung des zweiten Codes zum ersten Code. Aus didaktischen Gründen wird jedoch besonders ein Lernsystem bevorzugt werden, bei dem sämtlichen Informationsträgern ein einziger Scheibenträger zugeordnet ist.

Soll ein Lernsystem insbesondere für Vorschulkinder zur Verfügung gestellt werden, empfiehlt sich insbesondere, dass zumindest der erste Code ein Farb-Code ist. Dieser Farb-Code umfasst vorteilhaft wenigstens 6 Farben. Die Anzahl auszuwählender Farben hängt jedoch von der Anzahl von Aufgabe bzw. Fragen ab, welche auf dem Informationsträger zusammen mit den auszuwählenden Lösungen vorhanden sind.

Bei einer besonders einfachen Ausführungsform der erfindungsgemäßen Vorrichtung sind dabei die Felder mit den Lösungen mit jeweils einem Code-Element aus dem gewählten Farb-Code unterlegt. Der Benutzer bzw. das Kind kann dann seine Lösung für die Aufgabe unter den vorgegebenen Lösungen auswählen und die Farbe des Lösungsfeldes wird mit den der Aufgabe zugeordneten Wählscheiben eingestellt. Dazu ist erfindungsgemäß die Vorderseite der Wählscheiben unterteilt in gleiche Segmente mit allen Code-Elementen des ausgewählten Farb-Codes belegt.

Die Wählscheiben sind dazu zweckmäßiger Weise rund und die Farben des ausgewählten Farb-Codes, d.h. dessen einzelne Elemente, sind in einer später noch zu beschreibenden, den Code bildenden Ordnung, in Segmenten dieser runden Scheibe angeordnet. Theoretisch könnte die Wählscheibe auch durch ein Vieleck (zum Beispiel Viereck, Sechseck, Achteck, Zehneck, Zwölfeck usw.) gebildet sein, was die Anordnung der Felder bei einer erhöhten Anzahl von Lösungsmöglichkeiten und damit Code-Elementen im Code, ermöglicht. Das gilt generell für alle Codes, ob Farbe, Farbkombination, Zahlen, Buchstaben, Symbole und/oder sonstige graphische Muster.

Für Ausführungsformen, die als Lernsystem insbesondere bei Vorschulkindern Anwendung finden sollen, ist es von Vorteil, wenn auch der zweite Code, welcher auf der Rückseite der Wählscheibe angeordnet ist, ein Farb-Code ist. Dieser Farb-Code ist aus so vielen Farben ausgewählt, wie der Informationsträger Aufgaben bzw. Fragen enthält. Allgemein bedeutet das, dass der Code auf der Rückseite der Wählscheiben soviel Elemente enthalten muss, wie Aufgaben bzw. Fragen auf dem Informations-träger vorhanden sind.

Vorteilhaft ist es hierbei allerdings, solche Farben auszuwählen, die bereits im ersten Farb-Code enthalten sind. Die Zuordnung des zweiten Codes zum ersten Code wird dadurch erleichtert.

Die Zuordnung des zweiten Codes zum ersten Code erfolgt derart, dass das codierende Element des zweiten Codes auf der Rückseite der Wählscheiben und um 180° versetzt zu dem betreffenden Code-Element aus dem ersten Code angeordnet ist. Bei der Zuordnung von Lösung zur Aufgabe ist somit dieses Element aus dem zweiten Code verdeckt.

Bei einer besonders bevorzugten Ausführungsform der Erfindung ist die erwähnte Markierung, mittels welcher durch den zweiten Code angezeigt wird, wenn alle Aufgaben eines Informationsträgers richtig gelöst sind, als Fenster oder dergleichen Ausnehmung in dem Scheibenträger ausgebildet. Durch dieses Fenster oder dergleichen Ausnehmung werden die codierenden Elemente des zweiten Codes sichtbar. Da jeder Wählscheibe ein solches Fenster oder dergleichen Ausnehmung zugeordnet ist, werden, wenn alle Aufgaben richtig gelöst sind, in diesen Fenstern beispielsweise identische Farben, Zahlen, Buchstaben, Symbole oder dergleichen graphische Muster angezeigt.

Obwohl die Wahl des Farb-Codes insbesondere bei Vorschulkindern oder Schulanfängern didaktisch am wertvollsten erscheint, sind auch andere Code-Systeme denkbar. So können Lernsysteme für größere Kinder, welche bereits über ein größeres abstraktes Denkvermögen verfügen, weniger kindlich ausgestaltet werden. Die Zuordnung von Symbolen oder graphischen Mustern zueinander ist schwieriger als die Zuordnung von Farben.

Erfindungsgemäß wird daher insbesondere für den ersten Code, also den Code, mit welchem die Lösungen belegt werden und den auch die Vorderseiten der Wählscheiben tragen, ein Zahlen-Code, ein Buchstaben-Code, ein Code aus sonstigen Symbolen oder sonstigen graphischen Mustern sein. Im Rahmen der vorliegenden Erfindung sind unter Symbolen beispielsweise Sterne, Rauten, Kreise, Kleeblätter, Punkte und dergleichen figürliche Abbildungen wie Blumen, Bäume, Tiere, Sonne, Mond, Haus und dergleichen mehr zu verstehen. Graphische Muster können schwarz-weiß oder farbig sein.

Wichtig für die einfache Benutzung der Vorrichtung zur Prüfung der Richtigkeit der Lösung einer Aufgabe bzw. von Aufgaben ist aus didaktischen Gründen und aus Gründen der einfachen Handhabung jedenfalls immer, dass auf einfache Weise eine optische Übereinstimmung zwischen einer gefundenen Lösung bzw. deren Code und dem Code der auf der Vorderseite der Wählscheibe wiedergegeben ist, zu treffen ist.

Bei einer bevorzugten Ausführungsform ist auch dann der zweite Code auf der Rückseite der Wählscheibe, welcher letztendlich die Kontrolle liefert, ein Farb-Code. Dieser Farb-Code erscheint dann entsprechend der pro Aufgabe gewählten Lösung wieder in dem vorgesehenen Fenster und die Richtigkeit der Lösungen aller Aufgaben eines Informationsträgers wird durch identische Farben bestätigt.

Unabhängig davon, ob für das erste Codesystem ein Farben-Code, Zahlen-Code, Buchstaben- oder Symbol-Code verwendet wurde, kann der zweite Code auch ein Zahlen-Code sein. Dieser ist so zu dem ersten Code in Bezug gebracht, dass entsprechend der pro Aufgabe gewählten Lösung in dem Fenster eine Zahl erscheint und bei Richtigkeit aller Lösungen eines Informations-trägers identische Zahlen, zum Beispiel 1-1-1-1, oder eine Serie von Zahlen, zum Beispiel 1-2-3-4, angezeigt ist.

Unabhängig davon, welches Code-System für den ersten Code verwendet wird, kann der zweite Code auch ein Buchstaben-Code sein. Dieser ist auf der Rückseite der Wählscheibe in Bezug auf den ersten Code derart angeordnet, dass entsprechend der pro Aufgabe gewählten Lösung ein Buchstabe in dem Fenster bzw. den Fenstern erscheint und bei Richtigkeit aller Lösungen eines Informationsträgers identische Buchstaben oder ein Wort angezeigt sind. Bei dieser Ausführungsform können bei Benutzung des Lernsystems gleichzeitig z. B. Rechnen und Lesen eines Schülers trainiert werden.

Erfindungsgemäß kann auch der zweite Code ein aus Symbolen, wie Sterne, Kreise, Dreiecke, Rechtecke, Kleeblätter, Punkte und dergleichen, gebildeter Code sein. Die Richtigkeit der Lösung aller Aufgaben des Informationsträgers wird durch identische Symbole in den Fenstern angezeigt bzw. bestätigt.

Bei einer besonders bevorzugten und geeigneten Ausführungformliegt die vorangehend beschriebene Vorrichtung zur Überprüfung der Richtigkeit der Lösung von Aufgaben in Form eines Buches oder Heftes vor, dessen Seiten durch die Informationsträger gebildet sind und dessen rückseitiges Endblatt vorzugsweise versteift ist und die Wählscheiben trägt. Gegebenenfalls können Wählscheibenträger auch zwischen einzelnen Seiten von Informationsträgern oder Gruppen davon angeordnet sein.

Im Folgenden wird der vorliegende Erfindungsgegenstand anhand von Zeichnungen, die den Aufbau und die Bedienung der Vorrichtung zur Überprüfung der Richtigkeit der Lösung einer Aufgabe beschreiben können, erläutert, worin:
- Fig. 1: einen Informationsträger mit Aufgaben und Lösungen zeigt gemäß einer Ausführungsform;
- Fig. 2: auf einem gesonderten Scheibenträger angeordnete Wählscheiben zeigt;
- Fig. 3: den Informationsträger von Fig. 1 und den Wählscheibenträger von Fig. 2 in Benutzungs- bzw. Bedienungsposition zeigt und
- Fig. 4: die Rückseite des Wählscheibenträgers von Fig. 2 zeigt.

Vorab ist festzuhalten, dass für die Zwecke dieser Anmeldung zur Darstellung der Codes eine die bevorzugten Farben ersetzende Symbolik aus Wiedergabegründen gewählt werden musste.

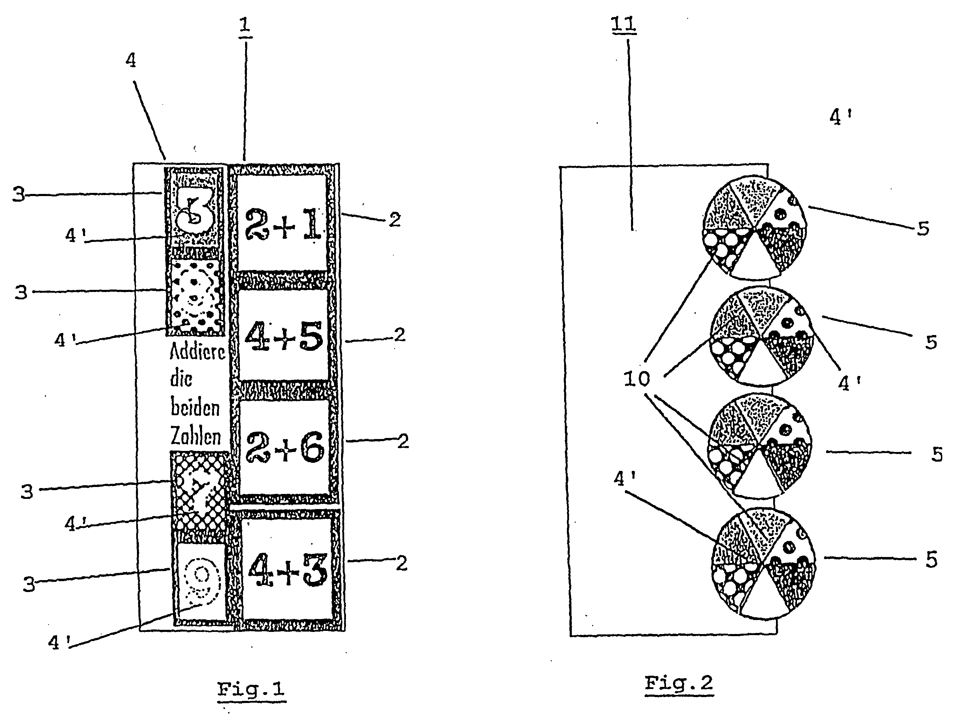

Dementsprechend ist in Fig. 1 ein Informationsträger 1 gezeigt, welcher gewissermaßen in zwei Spalten unterteilt ist. In der rechten Spalte sind von oben nach unten vier Aufgaben 2 angegeben. In der linken Spalte sind von oben nach unten vier mögliche Lösungen 3 für die Aufgaben 2 angeordnet. Die Aufgabenstellung "Addiere die beiden Zahlen" ist wiedergegeben. Die vier Lösungsfelder mit den möglichen Lösungen "3, 8, 7, 9", sind mit einem Code 4 bzw. einem Code-Element 4' daraus unterlegt. So ist die mögliche Lösung "3" beispielsweise mit einem schraffierten Feld (graphisches Muster) unterlegt. Die mögliche Lösung "8" ist durch ein weißes Feld mit schwarzen Punkten unterlegt, die Lösungsmöglichkeit "7" ist durch ein schwarzes Feld mit weißen Punkten unterlegt und die Lösungsmöglichkeit "9" ist mit einem weißen Feld unterlegt.

Die Fig. 2 zeigt einen Scheibenträger 11 mit Wählscheiben 5. Es ist wesentlich, dass die erfindungsgemäße Vorrichtung zur Überprüfung der Richtigkeit der Lösung 3 einer Aufgabe ebenso viele Wählscheiben 5 wie Aufgaben 2 pro Informationsträger 1 umfasst. Sind beispielsweise acht Aufgaben bzw. Fragen 2 vorgesehen, so sind auf dem Träger 11 auch acht Wählscheiben 5 anzuordnen.

Im gezeigten Fall sind vier Aufgaben 2 sowie vier Lösungen 3 auf dem Informationsträger 1 angegeben. Jede Lösung 3 ist mit einem ersten Code 4 bzw. einem Element 4' dieses Codes unterlegt. Diese Code-Elemente 4' finden sich in identischer Weise auch auf den Wählscheiben 5 wieder. Die Wählscheiben 5 sind bei der gezeigten Ausführungsform in sechs gleich große Segmente 10 unterteilt. Diese Segmente sind mit den sechs Code-Elementen 4' des Codes 4 unterlegt, wobei die Reihenfolge bei allen vier Wählscheiben 5 identisch ist.

Vier der gezeigten Code-Elemente 4' entsprechen den für die Lösungsfelder 3 verwendeten Code-Elementen 4'. Die beiden weiteren Code-Elemente 4' werden gegebenenfalls für die Zuordnung zum zweiten Code 7 benötigt und für weitere Informationsträger 1, deren Aufgaben 2 die Wählscheiben 5 zugeordnet sind, da hier die Lösungen 3 zu den Aufgaben 2 mit einer unterschiedlichen Kombination von Code-Elementen 4' aus dem Gesamtcode 4 unterlegt sein müssen. Dieser Code 7 kann aus denselben Code-Elementen 7' bestehen wie der erste Code 4. Für die richtige Codierung bzw. Zuordnung von Frage und Antwort ist jedoch eine andere nach einem bestimmten Schlüssel ausgewählte Abfolge der einzelnen auf der Wählscheibe 5 rückseitig 12 angeordneten Code-Elemente 7' erforderlich.

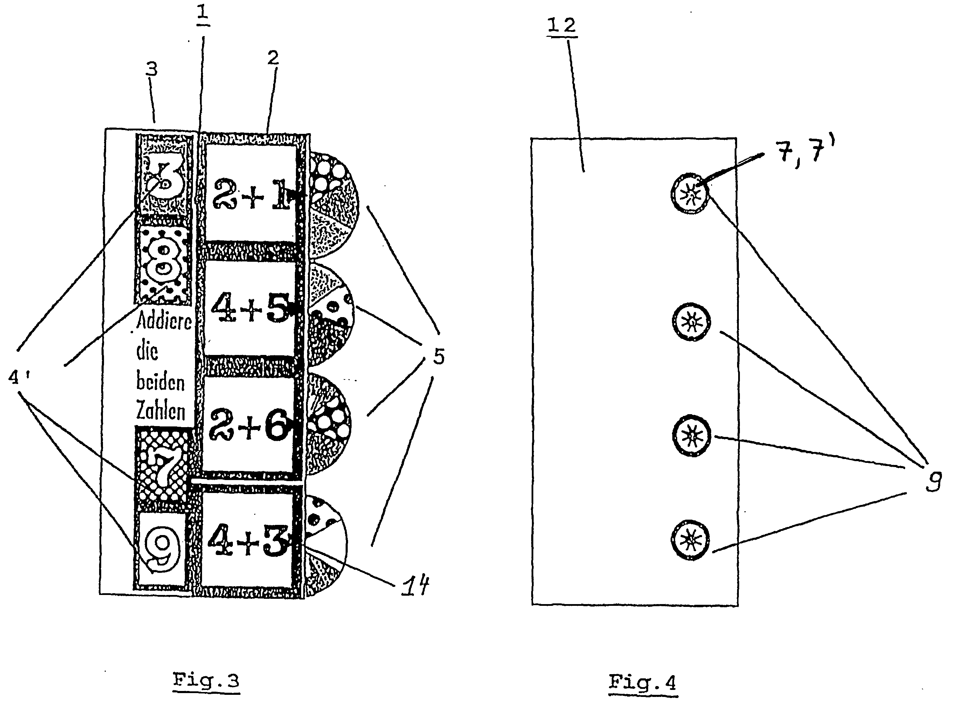

Vorab soll nun aber die Bedienung anhand der besonderen Ausführungsform der erfindungsgemäßen Vorrichtung veranschaulicht werden. In Fig. 3 ist dazu der Informationsträger 1 über dem Wählscheibenträger 11 angeordnet. Diese können bei mehreren Informationsträgern 1 und gegebenenfalls mehreren Wählscheibenträgern 11 zu einem Heft oder Buch zusammengefasst sein.

Der Informationsträger 1 umfasst die Aufgaben 2 sowie die Lösungen 3 (jeweils 4). Jede Lösung ist mit einem Code-Element 4 aus dem Code 4 unterlegt. In den Aufgabenfeldern ist ein Pfeil 14 sichtbar. Die erste Aufgabe lautet: "Addiere die beiden Zahlen 2 + 1". Die richtige Lösung 3 wäre "3". Diese Lösung 3 ist bei der dargestellten Ausführungsform durch ein grauschattiertes Feld (Code-Element 4') unterlegt. Auch die Wählscheibe 5 umfasst dieses Code-Element 4'. Das Code-Element 4' der Wählscheibe ist auf den Pfeil 14 auszurichten. Die zweite Aufgabe lautet: "Addiere die beiden Zahlen 4 + 5". Die richtige Antwort würde lauten: "9". Diese Lösung 3 ist in der dargestellten Ausführungsform mit einem weißen Feld unterlegt. Auch ein weißes Feld findet sich als Code-Element 4' auf der zweiten Wählscheibe 5 und dieses Code-Element 4' wäre mit dem Pfeil 14 im Aufgabenfeld auszurichten. Die dritte Aufgabe 2 von oben lautet: "Addiere die beiden Zahlen 2 + 6". Die richtige Antwort würde dementsprechend "8" lauten. Diese Lösung 3 ist durch ein Code-Element 4' unterlegt, das in der gezeigten Ausführungsform schwarze Punkte auf weißem Grund darstellt. Auch dieses Code-Element 4' findet sich auf der dritten Wählscheibe 5 und ist auf den Pfeil 14 auszurichten. Die vierte und im vorliegenden Fall letzte Aufgabe 2 lautet: "Addiere die beiden Zahlen 4 + 3". Die richtige Antwort würde lauten "7". Diese Lösung 3 ist durch ein schwarzes Feld mit weißen Punkten als Code-Element 4' unterlegt. Auf den Wählscheiben 5 findet sich auch ein solches Code-Element 4', das mit einem Pfeil 14 im Aufgabenfeld auszurichten wäre. Wenn dieser Vorgang beendet ist, hat der Benutzer alle Aufgaben gelöst. Die Richtigkeit der Lösung der Aufgaben überprüft der Benutzer durch Umdrehen der Vorrichtung.

Auf der Rückseite 6 der Wählscheiben 5 ist ein dem ersten Code 4 zugeordneter zweiter Code 7 vorgesehen (nicht gezeigt). In dem Träger 11 sind Fenster 9 im Bereich der Wählscheiben 5 angeordnet. Die Zuordnung des zweiten Codes 7 erfolgt derart, dass - wie im gezeigten Fall- bei richtig gelösten Aufgaben in jedem Fenster 9 das gleiche Code-Element bzw. ein identisches Symbol angezeigt ist.

Das dem vorliegenden Erfindungsgegenstand zugrundeliegende Prinzip wird im Folgenden an Beispielen erläutert.

Für das erste Beispiel wird ein Farb-Code sowohl für den ersten Code 4 als auch für den zweiten Code 7 gewählt. Aus Gründen der Wiedergabe kann hier nur eine verbale Beschreibung angegeben werden.

### Beispiel 1

Es wird von einer Vorrichtung ausgegangen, welche pro Informationsträger 1 vier Aufgaben 2 sowie vier Lösungen 3 enthält. Der erste Farb-Code 4 besteht aus sechs Farben, nämlich rot, gelb, blau, braun, lila und grün, welche in dieser Reihenfolge im Uhrzeigersinn in gleich großen Kreissegmenten 10 auf einer runden Wählscheibe 5 angeordnet sind. Die Rückseite 6 der Wählscheibe 5 ist ebenfalls in sechs Kreissegmente 10 unterteilt. Diese Kreissegmente 10 sind aber nur mit vier der Farben aus dem ersten Code 4 belegt. Daraus ergibt sich, dass jeweils zwei der Farben doppelt, also jeweils in zwei der Kreissegmente 10 der Wählscheibenrückseite erscheinen. Für den einfachen Fall, dass vier Fragen und vier Lösungen vorliegen, werden sechzehn Möglichkeiten der Einstellung benötigt. Daraus ergibt sich für die erste (oberste) Wählscheibe 5 im Uhrzeigersinn folgende Farbabfolge: rot-blau-gelb-grünblau-gelb. Für die zweite Wählscheibe 5 von oben ergibt sich die Folge:gelb-gelb-blau-rot-grün-rot. Für die dritte Wählscheibe 5 von oben ergibt sich die Folge:grün-grün-rot-blaugelb-blau. Für die vierte (unterste) Wählscheibe 5 ergibt sich die Farbfolge blau-rot-grün-gelb-rot-grün.

Zu Zwecken der Erläuterung wird nochmals Bezug auf Fig. 3 genommen. Das Ergebnis "3" wäre rot unterlegt, das Ergebnis "8" mit braun, das Ergebnis "7" mit gelb und das Ergebnis 9 mit grün. Damit alle Aufgaben richtig gelöst sind müssen die Wählscheiben 5 von oben nach unten auf rot, grün, braun und gelb eingestellt werden. In den Fenstern 9 auf der Rückseite 6 des Wählscheibenträgers 11 ist dann immer grün angezeigt. Das ergibt sich daraus, dass ein "grünes Feld" um 180° zur Lösungsfarbe auf der Rückseite jeder Wählscheibe angeordnet ist.

Weitere Beispiele für die Codierung bzw. der Codes zueinander ergeben sich aus den nachfolgenden Beispielen 2 bis 4. Diese sind Beispiele für Vorrichtungen, die pro Informationsträger vier Aufgaben, fünf Aufgaben oder sechs Aufgaben und dementsprechend vier, fünf oder sechs Wählscheiben beinhalten. Die Vorderseite der Wählscheiben ist dabei jeweils mit Zahlen, die Rückseite mit Buchstaben belegt. Den Zahlen/Buchstabenkombinationen sind die jeweiligen Lösungsschlüssel zugeordnet.

### Beispiel 2

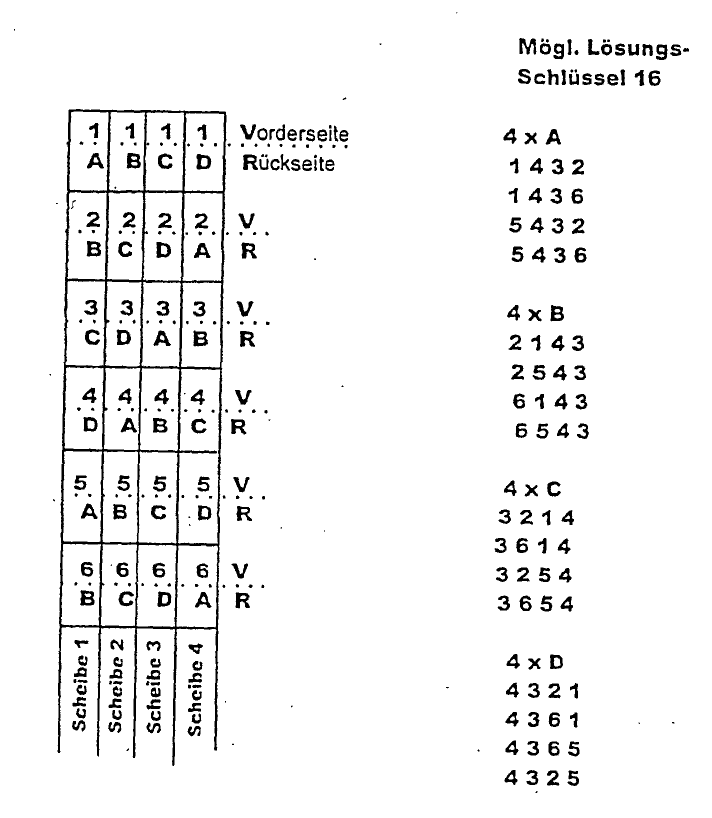

### Beispiel 3

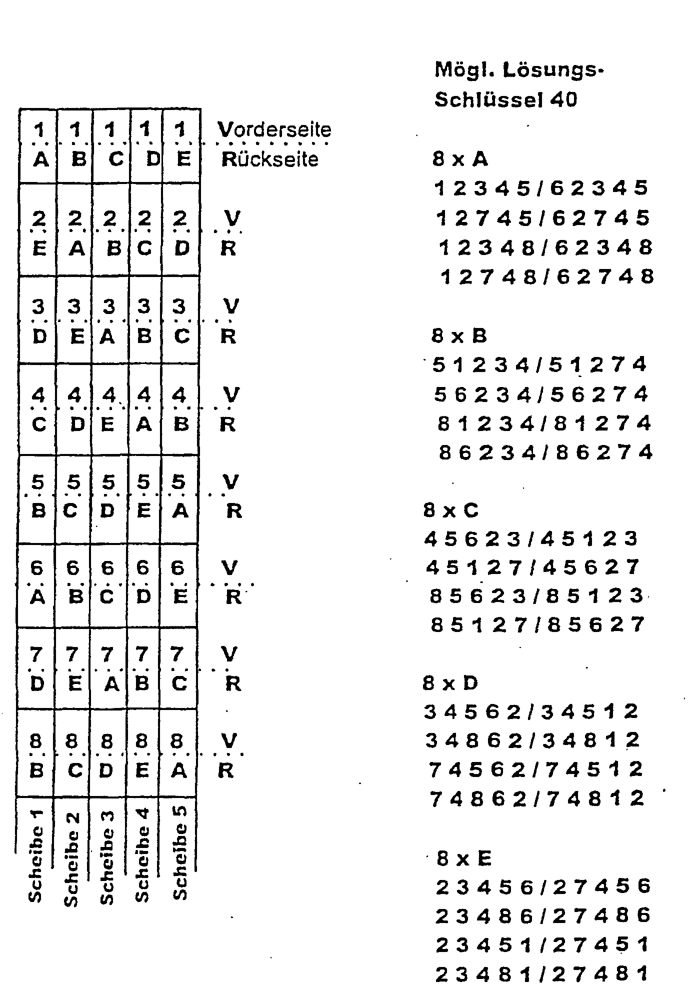

### Beispiel 4

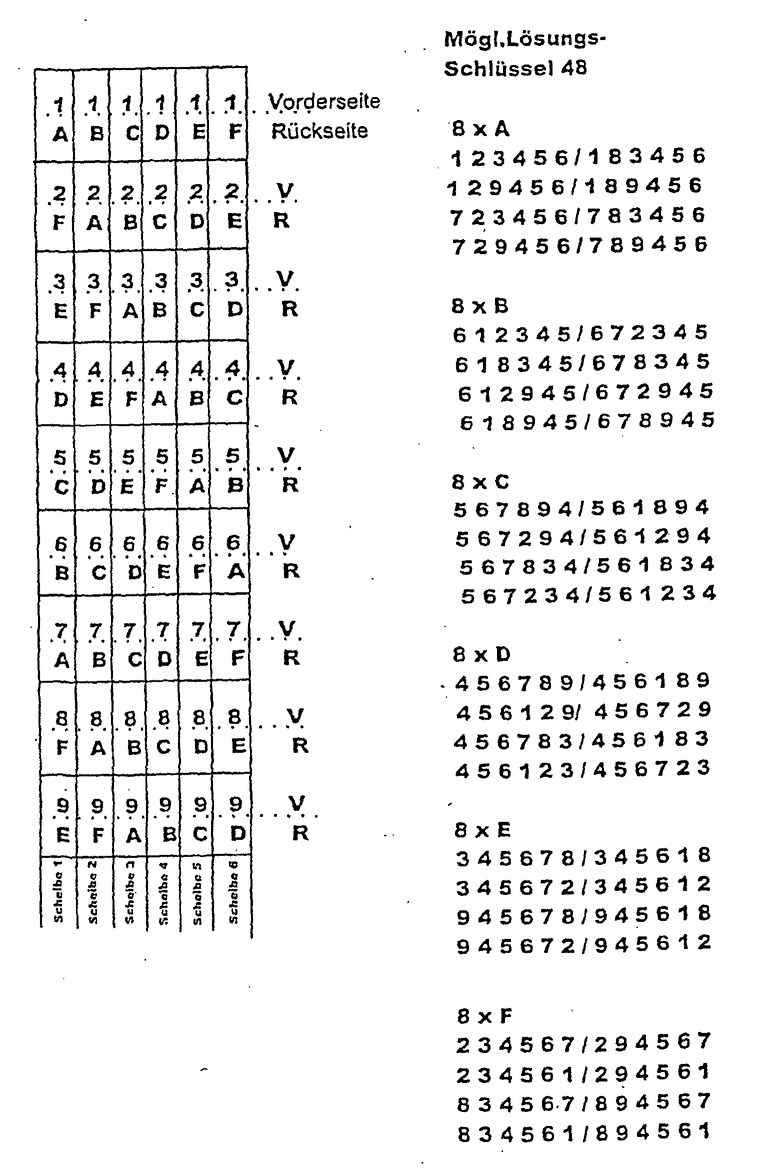

Es versteht sich, dass sich diese Lösungsschlüssel ohne weiteres erweitern und/oder auf andere Codekombinationen ohne weitere erfinderische Leistung übertragen lassen.

## Patentansprüche

1. Vorrichtung zur Überprüfung der Richtigkeit einer Lösung (3) einer Aufgabe (2), umfassend wenigstens einen Informationsträger (1), welcher wenigstens zwei Aufgaben (2) und den Aufgaben (2) zugeordnete Lösungen (3) aufweist,
**dadurch gekennzeichnet, dass**
die Lösungen (3) mit einem individualisierenden Code-Element (4') aus einem Code (4) versehen sind und den Aufgaben (2) Wählscheiben (5) zugeordnet sind, welche gegenüber dem Informationsträger (1) drehbar sind und über diesen seitlich hinausragen, wobei die Wählscheiben (5) auf ihrer Vorderseite mit dem Code (4) versehen sind, welcher die individualisierenden Code-Elemente (4') beinhaltet und jede Wählscheibe (5) auf ihrer Rückseite einen dem ersten Code (4) zugeordneten, aus Code-Elementen (7') gebildeten Code (7) aufweist und auf der Rückseite (12) eines jeden Informationsträgers (1) Markierungen (9) vorgesehen sind, mittels welcher durch den zweiten Code (7) angezeigt wird, ob alle Aufgaben (2) eines Informationsträgers (1) richtig gelöst sind.

2. Vorrichtung nach Anspruch 1, **dadurch gekennzeichnet, dass** der erste Code (4) und/oder der zweite Code (7) aus Farben, Farbkombinationen, Zahlen, Buchstaben oder Symbolen gebildet ist.

3. Vorrichtung nach einem der Ansprüche 1 oder 2, **dadurch gekennzeichnet, dass** die Wählscheiben (5) drehbar an einem Scheibenträger (11) befestigt sind, der hinter dem wenigstens einen Informationsträger (1) angeordnet ist.

4. Vorrichtung nach Anspruch 3, **dadurch gekennzeichnet, dass** der Informationsträger (1) und der Scheibenträger (11) miteinander integral ausgebildet sind.

5. Vorrichtung nach Anspruch 3, **dadurch gekennzeichnet, dass** der Informationsträger (1) und der Scheibenträger (11) getrennt voneinander ausgebildet sind.

6. Vorrichtung nach einem der Ansprüche 3 bis 5, **dadurch gekennzeichnet, dass** dem wenigstens einen Informationsträger (1) ein Scheibenträger (11) zugeordnet ist.

7. Vorrichtung nach einem der Ansprüche 3 bis 5, **dadurch gekennzeichnet, dass** sämtlichen Informationsträgern (1) ein Scheibenträger (11) zugeordnet ist.

8. Vorrichtung nach einem der vorhergehenden Ansprüche, **dadurch gekennzeichnet, dass** der erste Code (4) ein Farb-Code aus Code-Elementen (4') ist.

9. Vorrichtung nach Anspruch 8, **dadurch gekennzeichnet, dass** die Lösungen (3) mit jeweils einem Code-Element (4') aus dem Farb-Code unterlegt sind.

10. Vorrichtung nach Anspruch 9, **dadurch gekennzeichnet, dass** die Wählscheiben (5) auf der Vorderseite - unterteilt in gleiche Segmente (10) - alle Code-Elemente (4') des Farb-Codes (4) tragen.

11. Vorrichtung nach einem der Ansprüche 8 bis 10, **dadurch gekennzeichnet, dass** der zweite Code (7) ebenfalls ein Farb-Code ist.

12. Vorrichtung nach Anspruch 11, **dadurch gekennzeichnet, dass** der zweite Farb-Code (7) aus Code-Elementen (7') ausgewählt ist, die auch im ersten Farb-Code (4) enthalten sind.

13. Vorrichtung nach einem der vorhergehenden Ansprüche, **dadurch gekennzeichnet, dass** die Markierung (9) als Fenster oder dergleichen Ausnehmung ausgebildet ist, durch das bzw. die die Code-Elemente (7') des zweiten Codes (7) sichtbar werden.

14. Vorrichtung nach einem der Ansprüche 8 oder 13, **dadurch gekennzeichnet, dass** der zweite Farb-Code (7) entsprechend der pro Aufgabe (2) gewählten Lösung (3) in dem Fenster (9) erscheint, und bei richtiger Lösung aller Aufgaben identische Farben angezeigt sind.

15. Vorrichtung nach einem der Ansprüche 1 bis 7, **dadurch gekennzeichnet, dass** der erste Code (4) ein Zahlen-Code ist.

16. Vorrichtung nach einem der Ansprüche 1 bis 7, **dadurch gekennzeichnet, dass** der erste Code (4) ein Buchstaben-Code ist.

17. Vorrichtung nach einem der Ansprüche 1 bis 9, **dadurch gekennzeichnet, dass** der erste Code (4) ein Symbole-Code ist.

18. Vorrichtung nach einem der Ansprüche 15 bis 17, **dadurch gekennzeichnet, dass** der zweite Code (7) ein Farb-Code ist.

19. Vorrichtung nach Anspruch 15, **dadurch gekennzeichnet, dass** der zweite Farb-Code (7) entsprechend der pro Aufgabe (2) gewählten Lösung (3) in dem Fenster (9) erscheint und die Richtigkeit der Lösung aller Aufgaben (2) eines Informationsträgers (1) durch identische Farben angezeigt ist.

20. Vorrichtung nach einem der Ansprüche 1 bis 7 und 15 bis 17, **dadurch gekennzeichnet, dass** der zweite Code (7) ein Zahlen-Code ist.

21. Vorrichtung nach Anspruch 20, **dadurch gekennzeichnet, dass** entsprechend der pro Aufgabe (2) gewählten Lösung (3) in dem Fenster (9) eine Zahl erscheint und bei Richtigkeit aller Lösungen (3) eines Informationsträgers (1) identische Zahlen oder eine Serie von Zahlen angezeigt ist.

22. Vorrichtung nach einem der Ansprüche 1 bis 7 und 15 bis 17, **dadurch gekennzeichnet, dass** der zweite Code (7) ein Buchstaben-Code ist.

23. Vorrichtung nach Anspruch 22, **dadurch gekennzeichnet, dass** entsprechend der pro Aufgabe (2) gewählten Lösung (3) ein Buchstabe in dem Fenster (9) erscheint und bei Richtigkeit aller Lösungen (3) identische Buchstaben oder ein Wort angezeigt sind.

24. Vorrichtung nach einem der Ansprüche 1 bis 7 und 15 bis 17 **dadurch gekennzeichnet, dass** der zweite Code (7) ein aus Symbolen gebildeter Code ist.

25. Vorrichtung nach Anspruch 24, **dadurch gekennzeichnet, dass** bei richtiger Lösung (3) aller Aufgaben (2) des Informationsträgers (1) in den Fenstern (9) identische Symbole angezeigt sind:

26. Vorrichtung nach einem der Ansprüche 1 bis 25 in Form eines Buches oder Heftes.

## Claims

1. Device for task (2) results (3) accuracy control, including at least one information carrier (1) comprising at least two tasks (2) and solutions (3) assigned to those tasks (2) ,
**characterized in that**
the solutions (3) are provided with an individualized code element (4') from a code (4), and dials (5) are assigned to the tasks (2) which may be rotated with regard to the information carrier (1) towering above it from the side, whereby the dial (5) face is provided with the code (4) containing the individualized code elements (4') and the rear of each dial (5) is provided with a code (7) assigned to the first code (4) and made up of code elements (7'), while the rear (12) of each information carrier (1) is provided with marks (9) by means of which the second code (7) can indicate whether all the tasks (2) of one information carrier (1) have been solved correctly.

2. Device in accordance with claim 1, **characterized in that** the first code (4) and/or the second code (7) consist(s) of colours, combination of colours, numbers, letters or symbols.

3. Device in accordance with one of claims 1 or 2, **characterized in that** the dials (5) are fixed in a rotary way to a dial carrier (11) located behind the at least one information carrier (1).

4. Device in accordance with claim 3, **characterized in that** the information carrier (1) and the dial carrier (11) are developed in integration with one another.

5. Device in accordance with claim 3, **characterized in that** the information carrier (1) and the dial carrier (11) are developed separately from one another.

6. Device in accordance with one of claims 3 to 5, **characterized in that** one dial carrier (11) is assigned to the at least one information carrier (1).

7. Device in accordance with one of claims 3 to 5, **characterized in that** one dial carrier (11) is assigned to all the information carriers (1).

8. Device in accordance with one of the preceding claims, **characterized in that** the first code (4) is a colour code of code elements (4').

9. Device in accordance with claim 8, **characterized in that** the solutions (3) each are based on one code element (4') of the colour code.

10. Device in accordance with claim 9, **characterized in that** the dials (5) front side - divided into equal segments (10) - contain all the code elements (4') of the colour code (4).

11. Device in accordance with one of claims 8 to 10, **characterized in that** the second code (7) also represents a colour code.

12. Device in accordance with claim 11, **characterized in that** the second colour code (7) is selected from among code elements (7') which are also included in the first colour code (4).

13. Device in accordance with one of the preceding claims, **characterized in that** the mark (9) is designed as a window or a similar form through which the code elements (7') of the second code (7) may be seen.

14. Device in accordance with one of claims 8 or 13, **characterized in that**, according to the task (2) related chosen solution (3), the second colour code (7) appears in the window (9) and in case of correct solutions of all the tasks, identical colours are shown.

15. Device in accordance with one of claims 1 to 7, **characterized in that** the first code (4) is a numerical code.

16. Device in accordance with one of claims 1 to 7, **characterized in that** the first code (4) is a letter code.

17. Device in accordance with one of claims 1 to 9, **characterized in that** the first code (4) is a symbol code.

18. Device in accordance with one of claims 15 to 17, **characterized in that** the second code (7) is a colour code.

19. Device in accordance with claim 15, **characterized in that**, according to the task (2) related chosen solution (3), the second colour code (7) appears in the window (9) and the correctness of the solutions of all the tasks (2) of an information carrier (1) is shown by identical colours.

20. Device in accordance with one of claims 1 to 7 and 15 to 17, **characterized in that** the second code (7) is a numerical code.

21. Device in accordance with claim 20, **characterized in that**, according to the task (2) related chosen solution (3), a number appears in the window (9) and if all solutions (3) are correct for one information carrier (1), identical numbers or a series of numbers will be shown.

22. Device in accordance with one of claims 1 to 7 and 15 to 17, **characterized in that** the second code (7) is a letter code.

23. Device in accordance with claim 22, **characterized in that**, according to the task (2) related chosen solution (3), a letter appears in the window (9) and if all the solutions (3) are correct, identical letters or a word will be shown.

24. Device in accordance with one of claims 1 to 7 and 15 to 17, **characterized in that** the second code (7) is a code consisting of symbols.

25. Device in accordance with claim 24, **characterized in that** in case of a correct solution (3) of all the tasks (2) of the information carrier (1), identical symbols will be shown in the windows (9).

26. Device in accordance with one of claims 1 to 25, designed as a book or a notebook.

## Revendications

1. Dispositif pour vérifier si une solution (3) à un exercice (2) est correcte, lequel dispositif comprend au moins un support d'information (1) présentant au moins deux exercices (2) et les solutions (3) associées aux exercices, **caractérisé en ce que**, les solutions (3) sont pourvues d'un élément (4')-code qui individualise, à partir d'un code (4) et qu'on a associé des disques à choix (5) aux exercices qui sont susceptibles de tourner par rapport au support d'information (1) et qui font saillie sur le côté au dessus de celui-ci; les disques à choix (5) étant pourvus sur leur côté avant du code (4) qui contient les éléments- code (4) qui individualisent et chaque disque à choix (5) présentant sur son côté arrière un code (7) formé à partir d'éléments code (7'), associé au premier code (4) et des marques (9) prévus sur le côté arrière (12) de chaque support d'information (1) au moyen desquels on affiche au moyen du deuxième code (7) si tous les exercices (2) d'un support d'information (1) sont correctement solutionnés.

2. Dispositif selon la revendication 1, **caractérisé en ce que** le premier code (4) et/ou le deuxième code (7) est formé de couleurs; combinaisons de couleurs, chiffres, lettres ou symboles.

3. Dispositif selon la revendication 1 ou 2, **caractérisé en ce que** les disques à choix (5) sont fixés de façon rotative sur un support de disques (11) qui est disposé derrière au moins un support d'information (1).

4. Dispositif selon la revendication 3, **caractérisé en ce que** le support d'information (1) et le support de disques (11) sont réalisés de façon solidaire l'un avec l'autre.

5. Dispositif selon la revendication 3, **caractérisé en ce que** le support d'information (1) et le support de disques (11) sont formés de façon séparée l'un de l'autre.

6. Dispositif selon une des revendications 3 à 5, **caractérisé en ce qu'**un support de disques (11) est associé à au moins un support d'information.

7. Dispositif selon une des revendications 3 à 5, **caractérisé en ce qu'**un support de disques (11) est associé aux différents supports d'information(1).

8. Dispositif selon une des revendications précédentes, **caractérisé en ce que** le premier Code (4) est un code couleur à partir d'éléments- code (4').

9. Dispositif selon la revendication 6, **caractérisé en ce que** les solutions (3) sont chargées avec à chaque fois un élément code (4') à partir du code couleur.

10. Dispositif selon la revendication 9, **caractérisé en ce que** les disques à choix (5) portent sur le côté avant - répartis en segments égaux (10) - tous les éléments code (4') du code couleur (4).

11. Dispositif selon une des revendications 8 à 10, **caractérisé en ce que** le deuxième Code (7) est également un code couleur.

12. Dispositif selon la revendication 11, **caractérisé en ce que** le deuxième code couleur (7) est choisit parmi des éléments code (7') qui sont également présents dans le premier code couleur (4).

13. Dispositif selon une des revendications précédentes, **caractérisé en ce que** le marquage (9) est formé sous forme de fenêtre ou d'un évidemment similaire par lequel, respectivement lesquels, on peut voir les éléments code (7') du deuxième Code (7).

14. Dispositif selon une des revendications 8 ou 13, **caractérisé en ce que** le deuxième code couleur (7) apparaît à la fenêtre (9) selon la solution (3) choisie par exercice (2) et **en ce que** des couleurs identiques sont affichées lorsque tous les exercices sont solutionnés correctement.

15. Dispositif selon une des revendications 1 à 7, **caractérisé en ce que** le premier Code (4) est un code chiffre.

16. Dispositif selon une des revendications 1 à 7, **caractérisé en ce que** le premier Code (4) est un Code-Lettre.

17. Dispositif selon une des revendications 1 à 9, **caractérisé en ce que** le premier Code (4) et un code symbole.

18. Dispositif selon une des revendications 15 à 17, **caractérisé en ce que** le deuxième Code (7) est un code couleur.

19. Dispositif selon la revendication 15, **caractérisé en ce que** le deuxième code couleur (7) apparaît dan la fenêtre (9)selon la solution (3) choisie par exercice (2) et **en ce qu'**on affiche par des couleurs identiques si la solution de tous les exercices (2) d'un support d'information (1) est correcte.

20. Dispositif selon une des revendications 1 à 7 et 15 à 17, **caractérisé en ce que** le deuxième Code (7) est un code chiffre.

21. Dispositif selon la revendication 20, **caractérisé en ce qu'**un chiffre apparaît dans la fenêtre (9) selon la solution (3) choisie par exercice(2) et que des chiffre identiques ou une série de chiffres sont affichés lorsque toutes les solution (3) d'un support d'information (1) sont correctes.

22. Dispositif selon une des revendications 1 à 7 et 15 à 17, **caractérisé en ce que** le deuxième Code (3) est un code lettre.

23. Dispositif selon la revendication 22, **caractérisé en ce qu'**une lettre apparaît dans la fenêtre (9) selon la solution (3) choisie par exercice (2) et **en ce que** des lettres identiques ou un mot sont affichés lorsque toutes les solutions (3) sont correctes.

24. Dispositif selon une des revendications 1 à 7 et 15 à 17, **caractérisé en ce que** le deuxième code (7) est un code formé de symboles.

25. Dispositif selon la revendication 24, **caractérisé en ce que** des symboles identique sont affichés dans les fenêtres (9) lorsque la solution (3) de tous les exercices (2) du support d'information (1) est correcte.

26. Dispositif selon une des revendications 1 à 25 sous la forme d'un livre ou d'un cahier.
